# EUROPEAN PATENT APPLICATION

(11) **EP 4 851 075 A1**
(43) Date of publication of application: **09.12.2026**
(21) Application number: 24875730.4
(22) Date of filing: 30.01.2024
(51) Int. Cl.: B65G 23/04, F16H 55/36, B65G 39/09, B65G 39/02

(54) **TRANSPORT ASSEMBLY AND CONVEYING APPARATUS**

(71) Applicant: Suzhou Zhaowei Industrial Technology Co., Ltd., Suzhou, Jiangsu 215000 (CN); Shenzhen Zhaowei Machinery & Electronics Co., Ltd., Shenzhen, Guangdong 518000 (CN)
(72) Inventor: KE, Shanyao, Suzhou, Jiangsu 215000 (CN); XIE, Weiqun, Suzhou, Jiangsu 215000 (CN); HOU, Yongquan, Suzhou, Jiangsu 215000 (CN); JIAO, Wenqiang, Suzhou, Jiangsu 215000 (CN)
(74) Representative: Cabinet Netter
(86) International application number: PCT/CN2024/074686
(87) International publication number: WO 2025/160745

(57) **Abstract**

A transmission assembly and a conveying device are provided. The conveying device includes a transmission assembly, the transmission assembly includes a sleeve (10) and a rotation shaft (20), the sleeve (10) is formed with an accommodating cavity (101) and an opening (102) connected to the accommodating cavity (101). Part of the outer peripheral wall of the rotation shaft (20) is sleeved with a first bearing (30) and a second bearing (40), and the rotation shaft (20) together with the first bearing (30) and the second bearing (40) are placed into the accommodating cavity (101). An inner circumferential wall of the sleeve (10) is provided with a first step portion (11) and a second step portion (12), the first step portion (11) is provided abutting against a side of the first bearing (30) facing the second bearing (40), and the second step portion (12) is provided abutting against a side of the second bearing (40) away from the first bearing (30), the sleeve (10) is also connected with an anti-slip piece (50), the anti-slip piece (50) is placed on a side of the first bearing (30) away from the second bearing (40), the outer peripheral wall of the rotation shaft (20) is also sleeved with a limit piece (21), and the limit piece (21) is placed on a side of the second bearing (40) facing the first bearing (30). By arranging the sleeve (10), the rotation shaft (20), the first bearing (30) and the second bearing (40), the transmission assembly can operate with higher accuracy and better stability.

## Description

### TECHNICAL FIELD

The present application relates to the field of automation device technology, more particularly to a transmission assembly and a conveying device.

### BACKGROUND

In logistics applications, the using of a conveying device enables good to be sorted and transferred. The conveying device includes a motor, a transmission assembly and a multi-V belt. The multi-V belt is used to support the goods. The motor can drive the transmission assembly to rotate to drive the multi-V belt to move.

The existing transmission assembly includes a sleeve and a rotation shaft. The outer side of the rotation shaft is connected to a bearing and placed in the sleeve. The rotation shaft may move axially while rotating in a circumferential direction. Since the support effect of a single bearing on the rotation shaft is limited, the movement of the rotation shaft in the axial direction is prone to offset, so that the rotation shaft will drive the bearing to move, resulting in the separation of the rotation shaft and the bearing, causing the transmission assembly to be unable to be used normally. Therefore, there are problems such as low operation accuracy and insufficient use stability of the transmission assembly.

### SUMMARY

One objective of embodiments of the present application is to provide a transmission assembly and a conveying device to solve the technical problem that the transmission assembly provided with a single bearing in the existing technology has limited supporting effect on the rotation shaft, and the movement of the rotation shaft in the axial direction is prone to offset, which causes the transmission assembly to be unable to be used normally, resulting in low operation accuracy and insufficient use stability of the transmission assembly.

To solve the above technical problem, in accordance with a first aspect, an embodiment of the present application provides a transmission assembly. The transmission assembly includes a sleeve and a rotation shaft. The sleeve is formed with an accommodating cavity and an opening connected to the accommodating cavity. A part of the outer peripheral wall of the rotation shaft is sleeved with a first bearing and a second bearing, and the rotation shaft together with the first and second bearings are placed into the accommodating cavity. An inner circumferential wall of the sleeve is provided with a first step portion and a second step portion, the first step portion is provided abutting against a side of the first bearing facing the second bearing, and the second step portion is provided abutting against a side of the second bearing away from the first bearing. The sleeve is also connected with an anti-slip piece, and the anti-slip piece is placed on a side of the first bearing away from the second bearing. The outer peripheral wall of the rotation shaft is also sleeved with a limit piece, and the limit piece is placed on a side of the second bearing facing the first bearing.

The transmission assembly provided by the present application has the beneficial effect that: by arranging the sleeve and the rotation shaft to cooperate with each other, the rotation shaft is enabled to pass through the opening of the sleeve and to be placed into the accommodating cavity of the sleeve. Compared with the transmission assembly in the existing technology, the rotation shaft in the present application is supported by both the first bearing and the second bearing, which can reduce the deviation of the rotation shaft during the axial displacement, so that the movement of the rotation shaft is more stable and the operation accuracy is higher. The first step portion and the anti-slip piece are respectively arranged on opposite sides of the first bearing, which can limit the axial movement of the first bearing. The second step portion and the limit piece are respectively arranged on opposite sides of the second bearing, which can limit the axial movement of the second bearing. The limit piece is sleeved on the outer periphery of the rotation shaft, which can prevent the rotation shaft from being separated from the sleeve, thereby, the transmission assembly can operate with better stability.

In an achievable technical solution, an outer diameter of the first bearing is greater than an outer diameter of the second bearing, and the inner circumferential wall of the sleeve forms an inclined surface between the first step portion and the second step portion.

In an achievable technical solution, a plug hole connected to the accommodating cavity is provided at an end portion of the sleeve adjacent to the first bearing, and the anti-slip piece is a pin matched with the plug hole.

In an achievable technical solution, multiple anti-slip pieces and multiple plug holes are provided, and the multiple anti-slip pieces are in one-to-one correspondence with the multiple plug holes.

In an achievable technical solution, the outer peripheral wall of the rotation shaft is provided with a slot for the limit piece to be placed, and the limit piece is an annular structure with a notch.

In an achievable technical solution, the transmission assembly is also provided with a sealing component, and the inner circumferential wall of the sleeve is also provided with a third step portion, and the sealing component is sleeved on the outer peripheral wall of the rotation shaft, and one side of the sealing component abuts against the third step portion, and the other side of the sealing component abuts against the side of the second bearing away from the first bearing.

In an achievable technical solution, two limit pieces are provided, one of the two limit pieces abuts against the side of the first bearing facing the second bearing, and the other one of the two limit pieces abuts against the side of the second bearing facing the first bearing.

In an achievable technical solution, the transmission assembly is also provided with an end cover, the end cover is placed at the opening of the sleeve adjacent to the second bearing, and part of the end cover is sleeved on the outer peripheral wall of the rotation shaft and placed on the inner side of the second bearing.

In an achievable technical solution, the transmission assembly also includes a nut and a spring, the nut is placed at the opening of the sleeve adjacent to the first bearing, the nut is sleeved on the outer peripheral wall of the rotation shaft and placed on an inner side of the first bearing, and opposite ends of the spring are respectively connected to the nut and the limit piece.

In accordance with a second aspect, an embodiment of the present application also provides a conveying device which includes the above-mentioned transmission assembly.

Beneficial effects of the conveying device provided by the present application include that: by providing the above-mentioned transmission assembly, the conveying device can operate with higher accuracy and better stability.

### BRIEF DESCRIPTION OF DRAWINGS

To illustrate the technical solutions in the embodiments of the present application more clearly, the drawings required to be used in the embodiments or the prior art description will be briefly introduced below. Obviously, the drawings in the following description are only some embodiments of the present application. For ordinary technicians in this field, other drawings may also be obtained based on these drawings without exerting creative efforts.
FIG. 1 is a schematic diagram of a structure of a transmission assembly provided in an embodiment of the present application;
FIG. 2 is a cross-sectional view of the transmission assembly in FIG. 1 of the present application;
FIG. 3 is an exploded view of the transmission assembly in FIG. 1 of the present application;
FIG. 4 is a schematic diagram of a structure of a transmission assembly provided in another embodiment of the present application;
FIG. 5 is a cross-sectional view of the transmission assembly in FIG. 4 of the present application; and
FIG. 6 is an exploded view of the transmission assembly in FIG. 4 of the present application.

Among them, reference numerals in the figures are listed as follows:
10, sleeve; 11, first step portion; 12, second step portion; 13, third step portion; 14, sealing ring; 101, accommodating cavity; 102, opening; 103, inclined surface; 104, plug hole;
20, rotation shaft; 21, limit piece; 201, slot;
30, first bearing;
40, second bearing;
50, anti-slip piece;
60, sealing component;
70, end cover;
80, nut; and
90, spring.

### DETAILED DESCRIPTION OF EMBODIMENTS

To clarify the technical problems to be solved, technical solutions and beneficial effects of the present application, the present application is further described in detail below in conjunction with the accompanying drawings and embodiments. It should be understood that the specific embodiments described herein are only used to explain the present application and are not intended to limit the present application.

It should be noted that when an element is referred to as being "fixed on" or "arranged on" another element, it may be directly or indirectly on the other element. When an element is referred to as being "connected to" another element, it may be directly or indirectly connected to the other element.

It should be understood that the orientation or position relationship indicated by terms "length", "width", "upper", "lower", "front", "rear", "left", "right", "vertical", "horizontal", "top", "bottom", "inside", "outside" and the like is based on the orientation or position relationship shown in the accompanying drawings, which is only for the convenience of describing the present application and simplifying the description, rather than indicating or implying that the device or element referred to must have a specific orientation, be constructed and operated in a specific orientation, and therefore cannot be understood as a limitation on the present application.

In addition, the terms "first" and "second" are used for descriptive purposes only and cannot be understood as indicating or implying relative importance or implicitly indicating the number of technical features indicated. Therefore, the features defined as "first" and "second" may explicitly or implicitly include one or more of the features. In the description of the present application, the term "multiple" means two or more, unless otherwise clearly and specifically defined.

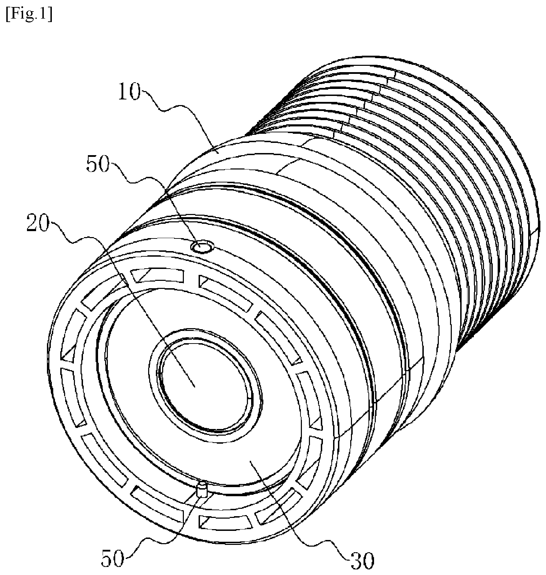

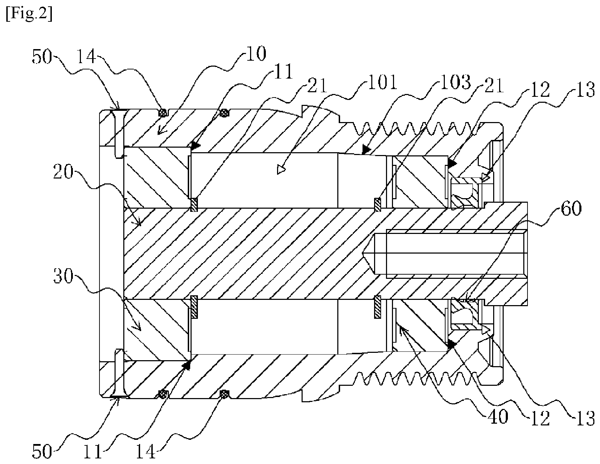

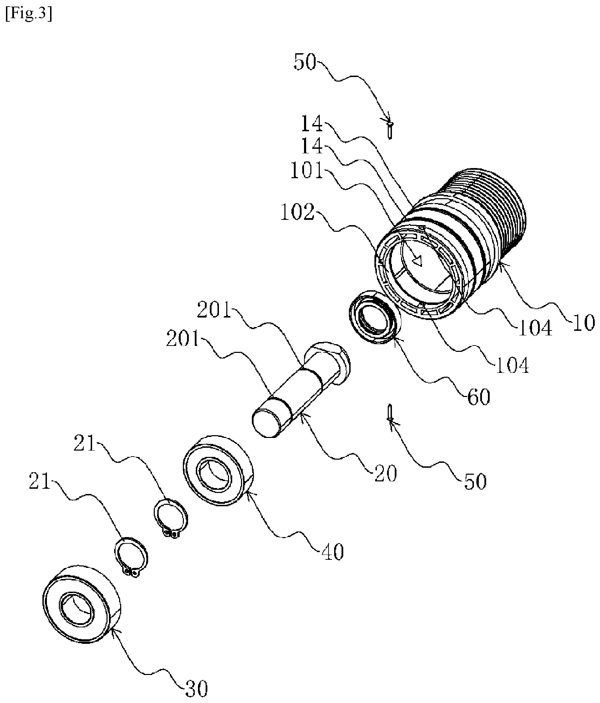

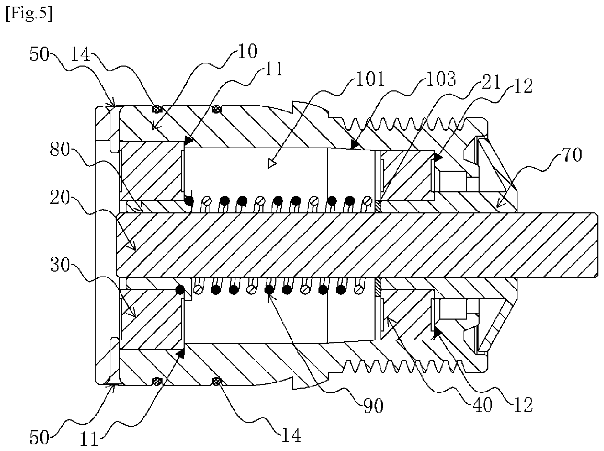

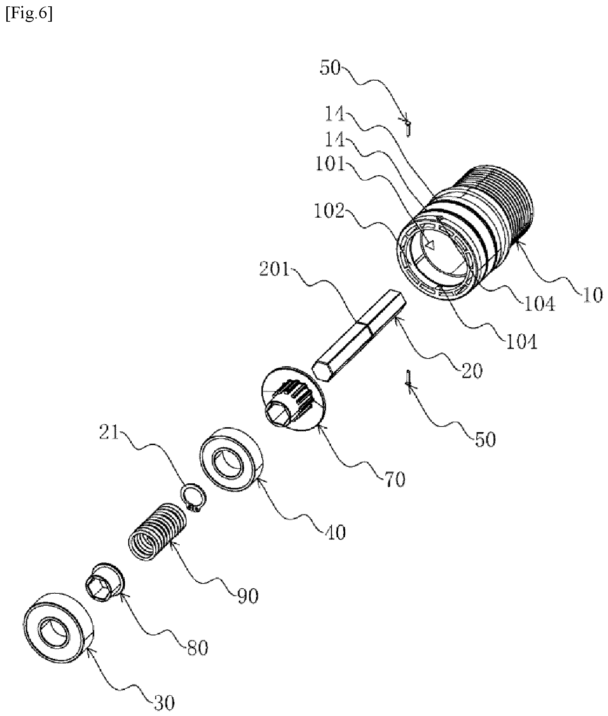

The following is a detailed description in combination with specific drawings and embodiments:
Referring to FIG. 1 to FIG. 6, an embodiment of the present application provides a transmission assembly, which includes a sleeve 10 and a rotation shaft 20. The sleeve 10 is formed with an accommodating cavity 101 and an opening 102 connected to the accommodating cavity 101. Part of the outer peripheral wall of the rotation shaft 20 is sleeved with a first bearing 30 and a second bearing 40. The rotation shaft 20 together with the first bearing 30 and the second bearing 40 are placed into the accommodating cavity 101. The inner circumferential wall of the sleeve 10 is provided with a first step portion 11 and a second step portion 12. The first step portion 11 is provided abutting against a side of the first bearing 30 facing the second bearing 40, and the second step portion 12 is provided abutting against a side of the second bearing 40 away from the first bearing 30. The sleeve 10 is also provided with an anti-slip piece 50, which is placed on the side of the first bearing 30 away from the second bearing 40. The outer peripheral wall of the rotation shaft 20 is also sleeved with a limit piece 21, which is placed on the side of the second bearing 40 facing the first bearing 30.

By arranging the sleeve 10 and the rotation shaft 20 to cooperate with each other, the rotation shaft 20 is enabled to pass through the opening 102 of the sleeve 10 and to be placed into the accommodating cavity 101 of the sleeve 10. The rotation shaft 20 is supported jointly by the first bearing 30 and the second bearing 40, which can reduce the deviation of the rotation shaft 20 during the axial displacement, so that the movement of the rotation shaft 20 is more stable and the operation accuracy is higher. The first step portion 11 and the anti-slip piece 50 are respectively arranged on the opposite sides of the first bearing 30, which can limit the axial movement of the first bearing 30. The second step portion 12 and the limit piece 21 are respectively arranged on the opposite sides of the second bearing 40, which can limit the axial movement of the second bearing 40. The limit piece 21 is sleeved on the outer periphery of the rotation shaft 20, which can prevent the rotation shaft 20 from being separated from the sleeve 10, thereby, the transmission assembly can operate with better stability.

In applications, the sleeve 10 has a cylinder structure, the rotation shaft 20 has a column structure, the first bearing 30 and the second bearing 40 are both disc-shaped structures, and the center of the first bearing 30 and the center of the second bearing 40 are respectively provided with a through hole for the rotation shaft 20 to pass through, and the sleeve 10, the rotation shaft 20, the first bearing 30 and the second bearing 40 may be made of alloy material.

In applications, the outer peripheral wall of the sleeve 10 is also provided with a sealing ring 14, and the sealing ring 14 is used to provide a protective seal when the transmission assembly is connected to an external structure.

In applications, the number of openings 102 is two, and the two openings 102 are respectively arranged on opposite sides of the sleeve 10, and a portion of the inner circumferential wall of the sleeve 10 adjacent to one of the two openings 102 protrudes radially to form a first step portion 11, and a portion of the inner circumferential wall of the sleeve 10 adjacent to the other one of the two openings 102 protrudes radially to form the second step portion 12.

In one embodiment, referring to FIG. 1 to FIG. 3, an outer diameter of the first bearing 30 is greater than that of the second bearing 40, and the inner circumferential wall of the sleeve 10 between the first step portion 11 and the second step portion 12 forms an inclined surface 103.

In applications, the diameter of the opening 102 of the sleeve 10 adjacent to the first step portion 11 is greater than the diameter of the opening 102 of the sleeve 10 adjacent to the second step portion 12, and by providing the inclined surface 103, it is convenient for the second bearing 40 and the first bearing 30 to pass through the opening 102 of the sleeve 10 adjacent to the first step portion 11 together with the rotation shaft 20 to be placed into the accommodating chamber 101, which enables the assembly of the transmission assembly to be simpler and more efficient.

In one embodiment, referring to FIG. 1 to FIG. 3, an end portion of the sleeve 10 adjacent to the first bearing 30 is provided with a plug hole 104 connected to the accommodating cavity 101, and the anti-slip piece 50 is a pin adapted to the plug hole 104.

In application, the plug hole 104 extends along a radial direction of the sleeve 10, and the length of the anti-slip piece 50 is not smaller than the extension length of the plug hole 104, so that an end of the anti-slip piece 50 can abut against the first bearing 30 to prevent the first bearing 30 from escaping from the accommodating cavity 101 of the sleeve 10.

In one embodiment, referring to FIG. 1 to FIG. 3, multiple anti-slip pieces 50 and multiple plug holes 104 are provided, and the multiple anti-slip pieces 50 are in one-to one correspondence with the multiple plug holes 104.

In applications, the limiting effect of the anti-slip piece 50 on the first bearing 30 may be enhanced, so that the installation of the first bearing 30 is more stable.

Particularly, in one embodiment of the present application, two anti-slip pieces 50 are provided, and the two anti-slip pieces 50 are symmetrically arranged. It can be understood that in other examples of the present application, more than two anti-slip pieces 50 may be provided, and the multiple anti-slip pieces 50 are evenly spaced along the circumference of the sleeve 10.

In one embodiment, referring to FIG. 1 to FIG. 3, the outer peripheral wall of the rotation shaft 20 is provided with a slot 201 to which the limit piece 21 may be placed, and the limit piece 21 is an annular structure with a notch.

In application, the width of the limit piece 21 is not smaller than the depth of the slot 201, so that the limit piece 21 protrudes with respect to the outer peripheral wall of the rotation shaft 20 around the slot 201. The limit piece 21 may be a clamp spring.

The limit piece 21 is made of elastically deformable materials such as alloy or plastic, which can facilitate the limit piece 21 to be sleeved in the slot 201 of the sleeve 10, so as to further improve the assembly efficiency of the transmission assembly.

In one embodiment, referring to FIG. 1 to FIG. 3, the transmission assembly is also provided with a sealing component 60, and the inner circumferential wall of the sleeve 10 also forms a third step portion 13. The sealing component 60 is sleeved on the outer peripheral wall of the rotation shaft 20, and one side of the sealing component 60 abuts against the third step portion 13, and the other side of the sealing component 60 abuts against the side of the second bearing 40 away from the first bearing 30.

In applications, a chamber is formed in the middle of the rotation shaft 20, and an inner circumferential wall of the rotation shaft 20 is provided with an internal thread for connection with an external structure. The sealing component 60 may be an oil seal ring, and the sealing component 60 is made of rubber. The sealing component 60 is used to prevent the leakage of lubricating oil, water, chemical liquid and other fluids from the accommodating cavity 101 of the sleeve 10, and also to prevent the intrusion of impurities such as dust, sand, etc., in the use environment.

In one embodiment, referring to FIG. 1 to FIG. 3, two limit pieces 21 are provided, and one of the two limit pieces 21 abuts against the side of the first bearing 30 facing the second bearing 40, and the other one abuts against the side of the second bearing 40 facing the first bearing 30.

In applications, the two limit pieces 21 may further limit the axial movement of the first bearing 30 and the second bearing 40, respectively, so that the first bearing 30 and the second bearing 40 can support the rotation shaft 20 more stably, and the operation accuracy of the transmission assembly is higher.

Particularly, when assembling the transmission assembly, the sealing component 60 and the second bearing 40 are first sleeved on the outer peripheral wall of the rotation shaft 20, and the two limit pieces 21 are respectively clamped in the corresponding slots 201, and then the first bearing 30 is sleeved on the outer peripheral wall of the rotation shaft 20. After that, an entirety consisting of the rotation shaft 20, the first bearing 30, the second bearing 40, the sealing component 60 and the two limit pieces 21 is passed through the opening 102 on the side of the sleeve 10 adjacent to the first step portion 11 and extended into the accommodating cavity 101 until the first bearing 30 abuts against the first step portion 11. Finally, each anti-slip piece 50 is respectively plugged into the corresponding plug hole 104.

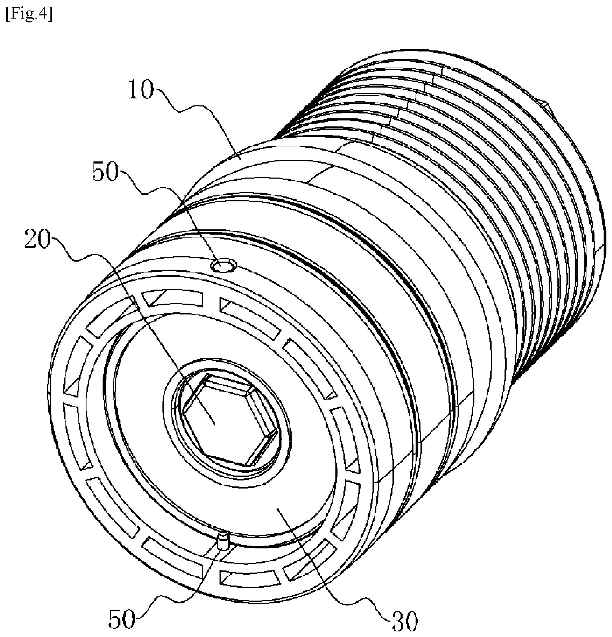

In one embodiment, referring to FIG. 4 to FIG. 6, the transmission assembly is also provided with an end cover 70, the end cover 70 is placed at the opening 102 of the sleeve 10 adjacent to the second bearing 40, and part of the end cover 70 is sleeved on the outer peripheral wall of the rotation shaft 20 and placed on the inner side of the second bearing 40.

In applications, the end cover 70 may limit the rotation shaft 20 in the axial direction to prevent the rotation shaft 20 from being separated from the accommodating cavity 101 from the opening 102 on the sleeve 10 adjacent to the first bearing 30.

In one embodiment, referring to FIG. 4 to FIG. 6, the transmission assembly also includes a nut 80 and a spring 90. The nut 80 is placed at the opening 102 of the sleeve 10 adjacent to the first bearing 30. The nut 80 is sleeved on the outer peripheral wall of the rotation shaft 20 and placed on the inner side of the first bearing 30. The opposite ends of the spring 90 are respectively connected to the nut 80 and the limit piece 21.

In applications, the spring 90 is used to reset the movement of the rotation shaft 20 in the axial direction. The rotation shaft 20 is a column with a polygonal cross section. The shape of the inner circumferential wall of the end cover 70 and the shape of the inner circumferential wall of the nut 80 are adapted to the shape of the rotation shaft 20, which can limit the rotation of the rotation shaft 20 relative to the end cover 70 and the nut 80 in the circumferential direction.

Particularly, when assembling the transmission assembly, the second bearing 40 is firstly sleeved on the outer peripheral wall of the rotation shaft 20, and then the limit piece 21 is clamped in the slot 201, and then the spring 90 and the nut 80 are sleeved on the outer peripheral wall of the rotation shaft 20 in sequence, and then the first bearing 30 is sleeved on the outer periphery of the nut 80. after that, the entirety consisting of the rotation shaft 20, the first bearing 30, the second bearing 40, the nut 80, the spring 90 and the limit piece 21 is passed through the opening 102 on the side of the sleeve 10 adjacent to the first step portion 11 and extended into the accommodating cavity 101 until the first bearing 30 abuts against the first step portion 11; then each anti-slip piece 50 is respectively inserted into the corresponding plug hole 104. Finally, the end cover 70 is sleeved on the outer peripheral wall of the rotation shaft 20 and extends into the accommodating cavity 101 from the opening 102 on the side of the sleeve 10 adjacent to the second step portion 12, until the second bearing 40 can be sleeved on the outer periphery of one end of the end cover 70 adjacent to the spring 90.

Referring to FIG. 1 to FIG. 4, the present application also provides a conveying device, which includes the above-mentioned transmission assembly.

In applications, the conveying device is equipped with the transmission component, which enables the conveying device to have higher operation accuracy and better stability.

The above-mentioned embodiment are merely some preferred embodiments of the present application and are not intended to limit the present application. Any modifications, equivalent replacements and improvements made within the spirit and principles of the present application shall be included within the protection scope of the present application.

## Claims

1. A transmission assembly, **characterized by** comprising a sleeve (10) and a rotation shaft (20), wherein the sleeve (10) is formed with an accommodating cavity (101) and an opening (102) connected to the accommodating cavity (101), a first bearing (30) and a second bearing (40) are sleeved on a part of an outer peripheral wall of the rotation shaft (20), and the rotation shaft (20) together with the first bearing (30) and the second bearing (40) are placed into the accommodating cavity (101);
an inner circumferential wall of the sleeve (10) is provided with a first step portion (11) and a second step portion (12), wherein the first step portion (11) is provided abutting against a side of the first bearing (30) facing the second bearing (40), and the second step portion (12) is provided abutting against a side of the second bearing (40) away from the first bearing (30);
an anti-slip piece (50) is further connected to the sleeve (10), and the anti-slip piece (50) is placed on a side of the first bearing (30) away from the second bearing (40); and
a limit piece (21) is further sleeved on the outer peripheral wall of the rotation shaft (20), and the limit piece (21) is placed on a side of the second bearing (40) facing the first bearing (30).

2. The transmission assembly according to claim 1, wherein an outer diameter of the first bearing (30) is greater than an outer diameter of the second bearing (40), and the inner circumferential wall of the sleeve (10) has an inclined surface (103) between the first step portion (11) and the second step portion (12).

3. The transmission assembly according to claim 1, wherein a plug hole (104) connected to the accommodating cavity (101) is provided at an end portion of the sleeve (10) adjacent to the first bearing (30), and the anti-slip piece (50) is a pin matched with the plug hole (104).

4. The transmission assembly according to claim 3, wherein multiple anti-slip pieces (50) and multiple plug holes (104) are provided, and the multiple anti-slip pieces (50) are in one-to-one correspondence with the multiple plug holes (104).

5. The transmission assembly according to claim 1, wherein the outer peripheral wall of the rotation shaft (20) is further provided with a slot (201) for the limit piece (21) to be placed, and the limit piece (21) is an annular structure with a notch.

6. The transmission assembly according to any one of claims 1 to 5, wherein the transmission assembly is further provided with a sealing component (60), the inner circumferential wall of the sleeve (10) is further provided with a third step portion (13), the sealing component (60) is sleeved on the outer peripheral wall of the rotation shaft (20), one side of the sealing component (60) abuts against the third step portion (13), and another side of the sealing component (60) abuts against the side of the second bearing (40) away from the first bearing (30).

7. The transmission assembly according to claim 6, wherein two limit pieces (21) are provided, one of the two limit pieces (21) abuts against the side of the first bearing (30) facing the second bearing (40), and another one of the two limit pieces (21) abuts against the side of the second bearing (40) facing the first bearing (30).

8. The transmission assembly according to any one of claims 1 to 5, wherein the transmission assembly is further provided with an end cover (70), the end cover (70) is placed at the opening (102) of the sleeve (10) adjacent to the second bearing (40), and a portion of the end cover (70) is sleeved on the outer peripheral wall of the rotation shaft (20) and placed on an inner side of the second bearing (40).

9. The transmission assembly according to claim 8, wherein the transmission assembly further comprises a nut (80) and a spring (90), the nut (80) is placed at the opening (102) of the sleeve (10) adjacent to the first bearing (30), the nut (80) is sleeved on the outer peripheral wall of the rotation shaft (20) and placed on an inner side of the first bearing (30), and opposite ends of the spring (90) are respectively connected to the nut (80) and the limit piece (21).

10. A conveying device, **characterized by** comprising the transmission assembly according to any one of claims 1 to 9.
